**Europäisches Patentamt**

**European Patent Office**

**Office européen des brevets**

(19)

(11) Veröffentlichungsnummer : **0 379 517 B1**

(12) **EUROPÄISCHE PATENTSCHRIFT**

(45) Veröffentlichungstag der Patentschrift :
**19.11.92 Patentblatt 92/47**

(51) Int. Cl.⁵ : **B60T 13/68**

(21) Anmeldenummer : **88908205.3**

(22) Anmeldetag : **15.09.88**

(86) Internationale Anmeldenummer :
**PCT/EP88/00843**

(87) Internationale Veröffentlichungsnummer :
**WO 89/02384 23.03.89 Gazette 89/07**

(54) **VERFAHREN ZUR UMSETZUNG EINES EINEM SOLLDRUCK ENTSPRECHENDEN SIGNALS.**

(30) Priorität : **16.09.87 DE 3731076**

(43) Veröffentlichungstag der Anmeldung :
**01.08.90 Patentblatt 90/31**

(45) Bekanntmachung des Hinweises auf die
Patenterteilung :
**19.11.92 Patentblatt 92/47**

(84) Benannte Vertragsstaaten :
**AT DE FR GB SE**

(56) Entgegenhaltungen :
**EP-A- 0 188 686**
**EP-A- 0 226 803**
**EP-A- 0 233 360**

(73) Patentinhaber : **ROBERT BOSCH GMBH**
**Postfach 30 02 20**
**W-7000 Stuttgart 30 (DE)**

(72) Erfinder : **KOST, Friedrich**
**Heinrich-Ebner-Stra e 24**
**W-7000 Stuttgart 50 (DE)**
Erfinder : **WEISS, Karl-Joseph**
**Hausgärten 33**
**W-7050 Waiblingen (DE)**
Erfinder : **VAN ZANTEN, Anton**
**Waldstra e 15/2**
**W-7257 Ditzingen 4 (DE)**

(74) Vertreter : **Kammer, Arno, Dipl.-Ing.**
**TELDIX GmbH Postfach 10 56 08 Grenzhöfer**
**Weg 36**
**W-6900 Heidelberg 1 (DE)**

## Beschreibung

Die Erfindung betrifft ein Verfahren zur Umsetzung eines einem Solldruck, insbesondere Sollbremsdruck entsprechenden Signals P∗ in ein eine Bremsdrucksteuereinrichtung für eine entsprechende Zeit ansteuerndes Steuersignal $\Delta T$ mit den Merkmalen des Oberbegriffs Patentanspruchs 1.

## Stand der Technik

Es ist z. B. aus der EP-A2-0226 803 bekannt im Radbremszylinder eines Fahrzeugrads einen Bremsdruck einzusteuern, der einem einen Sollbremsdruck kennzeichnenden Signal entspricht. Hierzu wird der eingesteuerte Bremsdruck gemessen und das Meßsignal mit dem Sollsignal verglichen. Aus der Abweichung wird ein Ansteuersignal für eine Ventileinrichtung gebildet, mit dem der Bremsdruck erhöht oder erniedrigt wird. Da die Druckänderung bei gegebener Ansteuerzeit druckabhängig ist, wird die ermittelte Abweichung mittels einer gespeicherten Druck-Zeit-Kennlinie in das Ansteuersignal umgesetzt.

## Vorteile

Diesem Stand der Technik gegenüber hat die Erfindung den Vorteil, daß der gewünschte Solldruck genauer und schneller eingesteuert werden kann. Die Erfindung kann z. B. bei ABS oder ASR zur Anwendung kommen. Ein weiterer Vorteil ist, daß das Verfahren auch Aussagen über den Zustand des Bremssystems zuläßt.

## Figurenbeschreibung

Anhand der Zeichnung wird ein Ausführungsbeispiel der Erfindung beschrieben. Es zeigen:
Fig. 1 ein Blockschaltbild zur Druchführung des Verfahrens
Fig. 2 + 3 Diagramme zur Erläuterung.

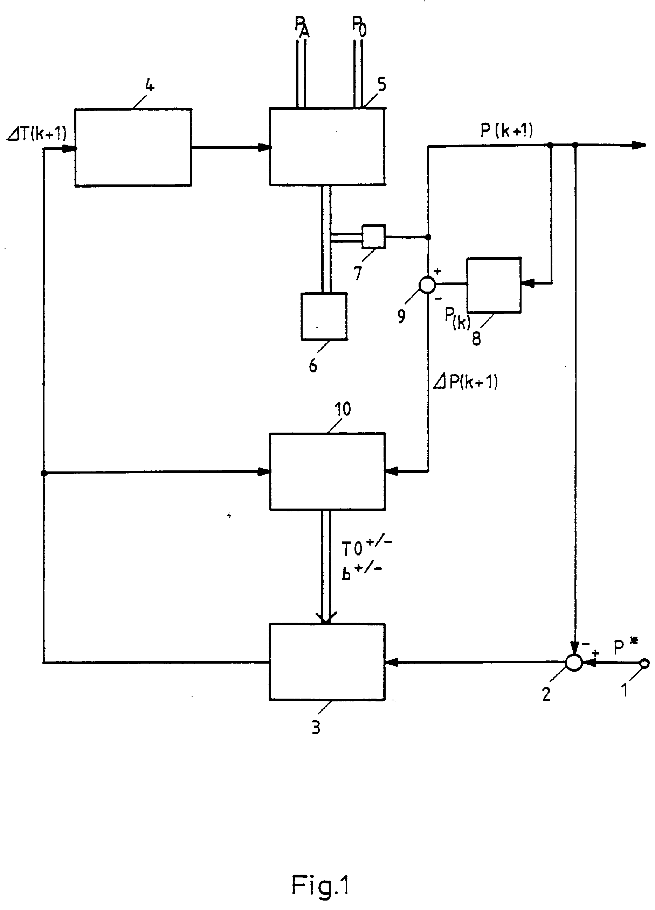

In Fig. 1 wird an einer Klemme 1 ein dem Solldruck entsprechendes Signal P∗ zugeführt, dem an den Überlagerungspunkt 2 ein dem im Radbremszylinder herrschenden Druck entsprechendes Signal gegengeschaltet wird. Das Differenzsignal wird einem Regelverstärker 3 zugeführt, der daraus ein Steuersignal $\Delta T$ erzeugt, das der Zeit entspricht, die bei den gerade herrschenden Verhältnissen notwendig ist, um den Druck auf den Solldruck zu erhöhen oder zu erniedrigen. Das Signal an Klemme 1 kann ein digitales Signal sein und die Differenz kann digital gebildet und weiterverarbeitet werden. Das Vorzeichen des Signals $\Delta T$ bestimmt, ob Druckaufbau bzw. Druckabbau gefordert wird. Kein Signal bedeutet Konstanthaltung. Das Signal $\Delta T$ wird einer Ventilsteuerlogik 4 zugeführt, die entsprechend dem Vorzeichen des Signals $\Delta T$ ein Einlaßventil oder ein Auslaßventil im Ventilblock 5 öffnet und damit einen Vordruck Po oder einen niedrigen Druck $P_A$ an einen Radbremszylinder 6 anschaltet. Die Ventilsteuerlogik 4 hält das Einlaßventil und das Auslaßventil normalerweise geschlossen und öffnet bei Auftreten eines Signals $\pm\Delta T$. In einem Meßwertgeber 7 wird der Bremsdruck gemessen. Das Meßsignal P wird dem Überlagerungspunkt 2, einem Speicher 8 und einem Überlagerungspunkt 9 zugeführt.

Die Messung, Speicherung und Auswertung erfolgt in kleinen Zeitabständen $T_A$. Im Speicher 8 ist jeweils der im vorhergehenden Takt ermittelte Bremsdruck gespeichert. Unterstellt man, daß der Meßwertgeber 7 im (K+1)ten Intervall den Bremsdruck ermittelt (Signal $P_{(K+1)}$, so ist im Speicher der Bremsdruck $P_{(K)}$ gespeichert. Am Ausgang der Uberlagerungsstelle 9 ergibt sich die Höhe des Drucksprunges $\Delta P_{(K+1)}$.

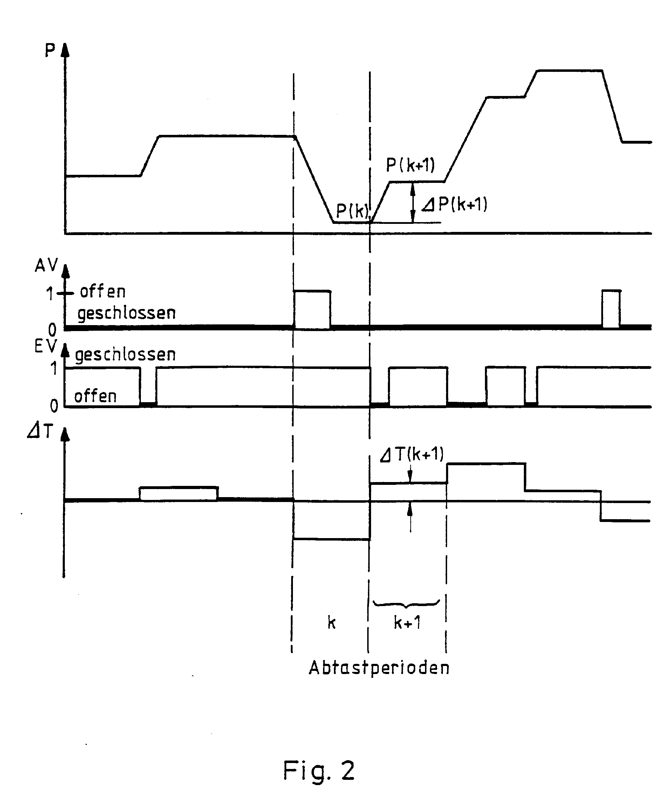

Der Druckverlauf P und die Ansteuersignale für die Ventile sowie der zugehörige Verlauf des Signals $\Delta T$ ergibt sich aus Fig. 2. Der Drucksprung $\Delta P_{(K+1)}$ und die Steuersignale $\pm\Delta T$ werden auch einem Identifizierer 10 zugeführt, der Signale $T_o^{+/-}$ und $b^{+/-}$ erzeugt.

Die Ansteuerung der Ventile erfolgt durch die Ventilansteuerlogik 4 im Regelintervall k+1 aufgrund des Stellsignals $\Delta T(k+1)$, für das die folgenden Vereinbarungen gelten:

$\Delta T(k+1) > 0$:     Das Einlassventil wird für eine Zeitdauer $|\Delta T(k+1)|$ geöffnet, dann wieder geschlossen. Das Auslaßventil bleibt geschlossen. Druck wird in der Zeit $|\Delta T(k+1)|$ aufgebaut.

$\Delta T(k+1) < 0$:     Das Auslassventil wird für eine Zeitdauer $|\Delta T(k+1)|$ geöffnet, dann wieder geschlossen. Das Einlaßventil bleibt geschlossen. Druck wird in der Zeit $|\Delta T(k+1)|$ abgebaut.

$\Delta T(k+1) = 0$:     Einlaßventil und Auslaßventil bleiben geschlossen (Druckkonstanthaltung)

Die Stellgröße $\Delta T(k+1)$ bewirkt einen Drucksprung von $\Delta P(k+1)$.

Folgende einfache Modellierung beschreibt die Zusammenhänge zwischen $\Delta T$ und $\Delta P$ recht gut:

$$\Delta P(k+1) = P(k+1)-P(k) = b^{+}(P(k), P0) * (\Delta T(k+1)+T0^{+}) \text{ für } \Delta T(k+1)>-T0^{+}, \}$$

$$\Delta P(k+1) = P(k+1)-P(k) = b^{-}(P(k), Pa) * (\Delta T(k+1)+T0^{-}) \text{ für } \Delta T(k+1)<-T0^{-}, \}(1)$$

$$\Delta P(k+1) = P(k+1)-P(k) = 0 \qquad\qquad \text{ für } -T0^{-}< \Delta T(k+1)<-T0^{+} \}$$

Darin sind die Verstärkungsfaktoren $b^{+}$ und $b^{-}$ aufgrund des Einflusses der Schluckkennlinie der Bremsenhydraulik sowie wegen des Einflusses der an den Ventilen anstehenden Druckdifferenzen druckabhängig.

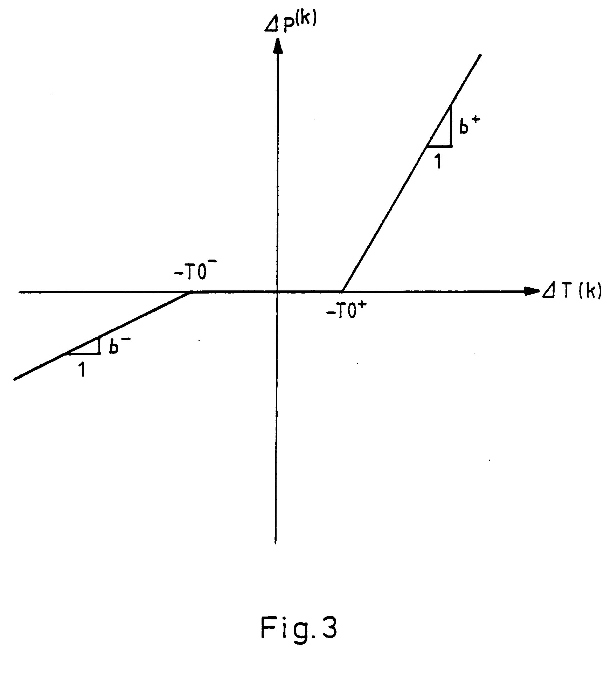

Die Werte von $b^{+}$ und $b^{-}$ können sich sehr stark unterscheiden. Der Einfluß elektrischer und mechanischer Trägheiten der Ventile wird durch Ansprechzeiten $T0^{+}$ und $T0^{-}$ modelliert. Fig. 3 veranschaulicht das Verhalten zwischen der Stellgröße $\Delta T(k+1)$ und dem Drucksprung $\Delta P(k+1) = P(k+1) - P(k)$ unter Vernachlässigung der Druckabhängigkeit der $b^{+}$ und $b^{-}$.

Aufgrund dieses Modells berechnet der Regler 3 die Stellgröße $\Delta T(k+1)$ gemäß der Vorschrift

$$\Delta T(k+1) = (P^{*}(k+1) - P(k))/b^{+} - T0^{+} \quad \text{für} \quad P^{*}(k+1) > P(k), \}$$

$$\Delta T(k+1) = (P^{*}(k+1) - P(k))/b^{-} - T0^{-} \quad \text{für} \quad P^{*}(k+1) < P(k), \} \qquad (2)$$

$$\Delta T(k+1) = 0 \qquad\qquad\qquad \text{für} \quad P^{*}(k-1) = P(k). \}$$

Hierin bedeutet $P*(k+1)$ der Drucksollwert, der mit dem Stellsignal $\Delta T(k+1)$ erreicht werden soll. Die Größen $b^{+}$, $b^{-}$, $T0^{+}$, $T0^{-}$ sind Schätzwerte für die wirklichen Parameter $b^{+}(P, P0)$, $b^{-}(P, Pa)$, $T0^{+}$, $T0^{-}$. Diese Werte können, wie im folgenden beschrieben, im Identifizierer 10 on line identifiziert werden.

Grundlage für eine Identifizierung sind Meßgleichungen der Form

$$z(j) = b^{+} * \Delta T(j) + b^{+} * T0^{+} \text{ für } \Delta T(j) > 0,$$
$$z(j) = b^{-} * \Delta T(j) + b^{-} * T0^{-} \text{ für } \Delta T(j) < 0,$$

wobei $z(j) = P(j) - P(j-1)$ der Drucksprung und $\Delta T(j) = \Delta T(k)$ ist, falls $\Delta T(k) \neq 0$ ist. j... ist der Index für die Identifikation (update von $b^{+/-}$ und $T^{+/-}$), k der Abtastindex. Nur wenn $\Delta T(k) \neq 0$ ist, kann zum Zeitpunkt k identifiziert werden.

Innerhalb einer kleineren Umgebung eines Druckarbeitspunktes können $b^{+}$ und $b^{-}$ als konstant angenommen werden. Das Durchlaufen großer Druckbereiche kann zu falschen Schätzungen dieser Parameter führen. Die Messungen für Aufbau und Abbau müssen getrennt verarbeitet werden, da sich $b^{+}$, $T0^{+}$ von $b^{-}$, $T0^{-}$ unterscheiden. Bekannte Verfahren zur Verarbeitung der Messungen sind z. B. recursive least squares-Verfahren. Hier soll jedoch ein Verfahren beschrieben werden, das diesem speziellen Problem besser angepaßt ist.

Zur einfacheren Beschreibung des Verfahrens soll beispielhaft das Vorgehen zur Bestimmung von $b^{+}$, $T0^{+}$, also $\Delta T(j) > 0$ betrachtet werden.

Zum Identifikationszeitpunkt j liege eine neue Bestimmung gemäß Gleichung (3) vor. Zuerst muß geprüft werden, ob auf die Stellgröße $\Delta T(j)$ eine Reaktion $z(j)$ erfolgt ist. Ist dies nicht der Fall, so wurde die Ansprechzeit $-T0^{+}$ nicht überschritten. Der Regler hat demnach mit einer zu kleinen Anspreczeit $-T0^{+}$ gerechnet. Deshalb wird in diesem Fall eine neue Schätzung gemäß der Beziehung

$$T0^{+}(j) = - \Delta T(j) * Sm + T0^{+}(j - 1) * (j - Sm) \quad (4)$$

durchgeführt. Hierin bedeutet $T0^{+}(j-1)$ die a priori-Schätzung für $T0^{+}$ und Sm ein konstanter Gewichtungsfaktor. Eine neue Schätzung für die Verstärkung $b^{+}$ kann in diesem Fall nicht erfolgen. Der entsprechende Wert $T_{0}^{-}(j)$ kann dem Punkt B1 der Anlage 1 entnommen werden.

Falls eine Reaktion $z(j)$ auf $\Delta T(j)$ erfolgt ist, so ist es möglich, aus Gleichung (3) zusammen mit der vorangegangenen Messung

$$z(j - 1) = b^{+} * \Delta T(j - 1) + b^{+} * T0^{+} \quad (5)$$

neue Schätzungen $b^{+}(k)$ und $T0^{+}$ zu bestimmen. Durch direktes Auflösen der Gleichungen (3) und (5) ergibt sich:

$$b1^{+}(j) = (z(j) - z(j-1)) / (\Delta T(j) - \Delta T(j-1)), \qquad (6)$$

$$T01^{+}(j) = (\Delta T(j)*z(j-1) - \Delta T(j-1)*z(j))/ (z(j) - z(j-1)).$$

Aus Gleichung (6) kann $b1^+(k)$ nicht bestimmt werden, wenn $\Delta T(j) = \Delta T(j-1)$ gilt. $T01^+(j)$ läßt sich nicht bestimmen, wenn $z(j) = z(j-1)$ erfüllt ist. In diesen Fällen ist den beiden Messungen keine Information über $b^+$ bzw. $T0^+$ zu entnehmen. Diesen Fällen kann dadurch Rechnung getragen werden, daß als neue Schätzungen $b^+(j)$ und $T0^+(j)$ nicht die nach Gleichung (6) ermittelten $b1^+(j)$ und $T01^+$ benutzt werden, sondern die gewichteten Mittelwerte aus $b1^+(j)$ und $b^+(j-1)$ bzw. $T01^+(j)$ und $T0^+(j-1)$. Der Gewichtungsfaktor für $b1^+(j)$ muß so gewählt werden, daß er für $\Delta T(j) = \Delta T(j-1)$ verschwindet; analog dazu muß der für $T01^+(j)$ verschwinden, wenn $z(j) = z(j-1)$ ist. Folgenden Gewichtungsfaktoren erfüllen diese Forderungen

$$(\Delta T(j) - \Delta T(j-1))^2 / ((\Delta T(j) - \Delta T(j-1))^2 + u^2) \text{ zur Gewichtung von } b1^+(j)$$
$$(z(j) - z(j-1))^2 / ((z(j) - z(j-1))^2 + v^2) \text{ zur Gewichtung von } T01^+(j)$$

Die gesamte Berechnungsvorschriften für die neuen Schätzungen $b^+(j)$ und $T0^+(j)$ lauten damit, wenn man

$$x(k) = \Delta T(j) - \Delta T(j-1),$$
$$y(j) = z(j) - z(j-1)$$

setzt:

$$b^+(j) = (y(j) * x(j) + u^2 * b^+(j-1)) / (x(j)^2 + u^2), \qquad (7)$$

$$T0^+(j) = \{(\Delta T(j)*z(j-1) - \Delta T(j-1)*z(j))*y(j) + v^2*T0^+(j-1)\}/(y(j)^2 + v^2).$$

Die entsprechenden Werte für $b^-(j)$ und $T_0^-(j)$ können dem Punkt B2 der Anlage 1 entnommen werden.

Mit Hilfe der konstanten Größen u und v lassen sich die Konvergenzgeschwindikeiten der Schätzungen getrennt beeinflussen.

Das gleiche Vorgehen läßt sich zur Bestimmung von $b^-(j)$ und $T0^-(j)$ anwenden, wenn $\Delta T(j) < 0$ ist.

Für $\Delta T(j) = 0$ entfällt die Neuschätzung der Parameter, d.h. der Index j erhöht sich nicht.

Die geschätzten Parameter $b^+$, $b^-$, $T0^+$ und $T0^-$ werden gemäß Gleichung (2) zur Berechnung des Stellsignals benötigt und deshalb dem Regelverstärker 3 zugeführt. Darüberhinaus kann insbesondere $b^+$ auch dazu benutzt werden, eine ABS-Regelung zu beenden, wenn der dafür erforderliche Vordruck P0 nicht zur Verfügung steht. In diesem Fall wird $b^+$ sehr klein.

Wird zusätzlich zu den Radbremsdrücken auch der Vordruck P0 gemessen, können mittels $b^+$ und $b^-$ Aussagen über die Funktion des Bremssystems gemacht werden. Sind die Werte für $b^+$ und $b^-$ trotz ausreichender Druckdifferenz zu klein, so ist zu vermuten, daß sich Luft im Bremssystem befindet. Aus der großen $T0^+$ bzw. $T0^-$ kann auf klemmende Ventile geschlossen werden.

Verwendete Formelzeichen

| | |
|---|---|
| P | Radbremsdruck, |
| $\Delta T$ | Stellgröße, |
| $\Delta P$ | Drucksprung, |
| $P_*$ | Solldruck, |
| P0 | Vordruck, |
| PA | Umgebungsdruck, |
| $b^{+/-}$ | Verstärkungsfaktor für Druckaufbau/-abbau, |
| $T0^{+/-}$ | Ansprechzeit des Einlaß/Auslaßventils, |
| z | Meßgröße in Identifikationsgleichung, |
| Sm, u, v, | Gewichtungsfaktoren, |
| x, y | Zwischengrößen, |
| $b1^+$, $T01^+$ | Zwischengrößen, |
| k | Index für Regelintervall, |
| j | Index für Identifikation. |

Anlage 1

Der gesamte Algorithmus für die Neuschätzungen $b^+(j)$, $b^-(j)$, $T0^+(j)$ und $T0^-$8j) lautet:

A) $\Delta T(k) > 0$:

$$\Delta T^+(j-1) = \Delta T^+(j), z^+(j-1) = z^+(j), \Delta T^+(j) = \Delta T(k),$$
$$z^+(j) = P(k) - P(k-1)$$

A1) $z^+(j) = 0$:

$$T0^+(j) = -\Delta T(j) * Sm + T0^+(j-1) * (j - Sm)$$

→ nächste Abtastung

A2) $z^+(j) \neq 0$:

$$x(j) = \Delta T^+(j) - \Delta T^+(j - 1),$$
$$y(j) = z^+(j) - z^+(j - 1),$$
$$b^+(j) = (y(j) * x(j) + u^2 * b^+(j - 1)) / (x(j)^2 + u^2),$$
$$TO^+(j) = \{(\Delta T^+(j) * z^+(j - 1) - \Delta T^+(j - 1)) * z^+(j)) * y(j) + v^2 * TO^+(j - 1) \}/(y(j)^2 + v^2)$$

→ nächste Abtastung

B) $\Delta T^+(k) < 0$:

$$\Delta T^-(j - 1) = \Delta T^-(j), z^-(j - 1) = z^-(j), \Delta T^-(j) = \Delta T(k),$$
$$z^-(j) = P(k) - (P(k - 1)$$

B1) $z^-(j) = 0$:

$$TO^-(j) = -\Delta T^-(j) * Sm + TO^-(j - 1) * (1 - Sm)$$

→ nächste Abtastung

B2) $z^-(j) \neq 0$:

$$x(j) = \Delta T^-(j) - \Delta T^-(j - 1),$$
$$y(j) = z^-(j) - z^-(j - 1),$$
$$b^-(j) = (y(j) * x(j) + u^2 * b^-(j - 1)) / (x(j)^2 u^2),$$
$$TO^-(j) = \{(\Delta T^-(j) * z^-(j - 1) - \Delta T^-(j - 1) * z^-(j)) * y(j) + v^2 * TO^-(j - 1)\}/(y(j)^2 + v^2)$$

→ nächste Abtastung

C) $\Delta T(k) = 0$: Keine Neuschätzung → nächste Abtastung

## Patentansprüche

1. Verfahren zur Umsetzung eines einem Solldruck, insbesondere Sollbremsdruck entsprechenden Signals P∗ in eine Drucksteuereinrichtung (4) für eine entsprechende Zeit anzusteuerndes Steuersignal ΔT, wobei ein Meßgerät (7) den erzeugten Druck mißt und ein entsprechendes Signal P liefert, und wobei die Länge des Steuersignals ΔT aus dem Unterschied zwischen dem den Solldruck wiedergebenden Signal P∗ und dem dem eingesteuerten Druck entsprechenden Signal P und durch eine Umrechnung ermittelt wird, <u>dadurch gekenn-zeichnet</u>, daß die Länge des Steuersignals ΔT(k+1) im Regelintervall (k+1) durch den Unterschied zwischen dem den Solldruck wiedergebenden Signal P∗(k+1) und dem dem im vorhergenden Regelintervall (k) eingesteuerten Druck entsprechenden Signal P(k) (in 8 gespeichert) und einem variablen Verstärkungsfaktor V sowie durch eine variable Ansprechzeit T0 der Drucksteuereinheitrichtung (4) bestimmt wird und daß in einem Identifizierungvorgang (in 10) Schätzwerte für den Verstärkungfaktor V und die Ansprechzeit T0 der Drucksteuereinheit aus den vorangegangenen Druckunterschieden P(j)-P(j-1) und P(j-1)-P(j-2) und den zugehörigen Ansteuerzeiten ΔT(j) und ΔT(j-1) ermittelt werden, wobei j der Index der Identifizierung ist.

2. Verfahren nach Anspruch 1, dadurch gekennzeichnet, daß die Steuersignale für Druckaufbau und Druckabbau gemäß den Beziehungen

$$\Delta T(k+1)=(P^*(k+1)-P(k))/b^+ - TO^+ \quad \text{für} \quad P^*(k+1) > P(k),$$
$$\Delta T(k+1)=(P^*(k+1)-P(k))/b^- - TO^- \quad \text{für} \quad P^*(k+1) < P(k),$$
$$\Delta T(k+1)=0 \quad \text{für} \quad P^*(k+1) = P(k)$$

ermittelt werden, wobei $1/b^+$ und $1/b^-$ die Verstärkungsfaktoren und $TO^+$ und $TO^-$ die Ansprechzeiten für Druckaufbau- und -abbau sind.

3. Verfahren nach Ansprüche 1 und 2, dadurch gekennzeichnet, daß geprüft wird, ob die Drucksteuereinrichtung (4) bei dem zuletzt gebildeten Steuersignal ΔT(k) angesprochen hat und daß bei Nichtansprechen aus der zuletzt ermittelten Ansprechzeit T0 und dem Steuersignal ΔT(k) unter Verwendung von Gewichtungsfaktoren ein Schätzwert für T0 ermittelt wird.

4. Verfahren nach Anspruch 1 oder 2, dadurch gekennzeichnet, daß b(j) und/oder T0(j) nach Maßgabe der Gleichungen

$$b^+(j) = (y(j) * x(j) + u^2 * b^+(j - 1))/(x(j)^2 + u^2),$$

$$TO^+(j) = \{(\Delta T(j) * z^+(j-1) - \Delta T(j-1) * z^+(j)) * y(j) + v^2 * TO^+(j-1)\}/(y(j)^2 + v^2)$$
$$b^-(j) = (y(j) * x(j) + u^2 \cdot b^-(j-1)) / (x(j)^2 + u^2)$$
$$TO^-(j) = \{(\Delta T(j) * z^-(j-1) - \Delta T^-(j-1) * z^-(j)) * y(j) + v^2 * TO^-(j-1)\} / (y(j)^2 + v^2)$$

gewonnen werden, wobei

$$x(j) = \Delta T(j) - \Delta T(j-1),$$
$$y(j) = z(j) - z(j-1)$$

ist und u und v Konstante sind.

## Claims

1. Method of converting a signal P∗ corresponding to a set pressure, in particular a set brake pressure, into [lacuna] control signal $\Delta T$ to actuate a pressure control device (4) for a corresponding time, a measuring unit (7) measuring the pressure generated and supplying a corresponding signal P, the length of the control signal $\Delta T$ being determined from the difference between the signal P∗, reproducing the set pressure, and the signal P, corresponding to the input pressure, and by a conversion, characterised in that the length of the control signal $\Delta T(k+1)$ in the control interval (k+1) is determined by the difference between the signal P∗(k+1) reproducing the set pressure and the signal P(k) (stored in 8) corresponding to the pressure input in the previous control interval (k) and a variable amplification factor V as well as by a variable response time T0 of the pressure control unit direction [sic] (4), and in that, in an identification process (in 10), estimated values for the amplification factor V and the response time T0 of the pressure control unit are established from the previous pressure differences P(j)-P(j-1) and P(j-1)-P(j-2) and the associated response times $\Delta T(j)$ and $\Delta T(j-1)$, j being the index of the identification.

2. Method according to Claim 1, characterised in that the control signals for pressure build-up and pressure reduction are established according to the relationships

$$\Delta T(k+1) = (P^*(k+1) - P(k))/b^+ - TO^+ \text{ for } P^*(k+1) > P(k),$$
$$\Delta T(k+1) = (P^*(k+1) - P(k))/b^- - TO^- \text{ for } P^*(k+1) < P(k),$$
$$\Delta T(k+1) = 0 \qquad\qquad\qquad \text{ for } P^*(k+1) = P(k).$$

$1/b^+$ and $1/b^-$ being the amplification factors and $TO^+$ and $TO^-$ being the response times for pressure build-up and reduction.

3. Method according to Claims 1 and 2, characterised in that it is checked whether the control device (4) has responded at the time of the control signal $\Delta T(k)$ last formed and that, in the event of no response, an estimated value for T0 is established from the last established response time T0 and the control signal $\Delta T(k)$ with the use of weighting factors.

4. Method according to Claim 1 or 2, characterised in that b(j) and/or T0(j) are obtained according to the equations

$$b^+(j) = (y(j) * x(j) + u^2 * b^+(j-1) / (x(j)^2 + u^2),$$
$$TO^+(j) = \{(\Delta T(j) * z^+(j-1) - \Delta T(j-1) * z^+(j)) * y(j) + v^2 * TO^+(j-1)\}/(y(j)^2 + v^2)$$
$$b^-(j) = (y(j) * x(j) + u^2 \cdot b^-(j-1)) / (x(j)^2 + u^2)$$
$$TO^-(j) = \{(\Delta T(j) * z^-(j-1) - \Delta T^-(j-1) * z^-(j)) * y(j) + v^2 * TO^-(j-1)\}/(y(j)^2 + v^2)$$

in which

$$x(j) = \Delta T(j) - \Delta T(j-1),$$
$$y(j) = z(j) - z(j-1)$$

and u and v are constants.

## Revendications

1. Procédé de conversion d'un signal P∗ correspondant à une pression de consigne notamment une pression de consigne de frein en un signal de commande $\Delta T$ commandant une installation de commande de pression (4) pendant une durée correspondante, un appareil de mesure (7) mesurant la pression engendrée et fournissant un signal correspondant P et la durée du signal de commande $\Delta T$ est déterminée à partir de la différence entre le signal P* représentant la pression de consigne et le signal P correspondant à la pression commandée, avec conversion, procédé caractérisé en ce qu'on détermine la durée du signal de commande $\Delta T(k+1)$ dans l'intervalle de régulation $(k+1)$ comme différence entre le signal P*(k+1) représentant la pression de consigne et le signal P(k) (mis en mémoire dans la mémoire 8) correspondant à la pression commandée dans l'intervalle de régulation (k) précédent, et d'un coefficient d'amplification variable V et par un temps de réponse variable T0 de l'installation de commande de pression (4) et en ce que par une opération d'identification (dans 10) on détermine des valeurs évaluées pour le coefficient d'amplification V et le temps de réponse T0 de l'unité de commande de pression à partir des différences de pression précédentes P(j)-P(j-1) et P(j-1)-P(j-2) ainsi que les temps d'actions correspondantes $\Delta T(j)$ et $\Delta T(j-1)$, j étant l'indice d'identification.

2. Procédé selon la revendication 1, caractérisé en ce qu'on détermine les signaux d'augmentation et de diminution de pression selon les relations :

$$\Delta T(k+1)=(P*(k+1)-P(k))/b^+-T0^+ \text{ pour } P*(k+1) > P(k),$$
$$\Delta T(k+1)=(P*(k+1)-P(k))/b^--T0^- \text{ pour } P*(k+1) < P(k),$$
$$\Delta T(k+1)=0 \qquad\qquad\qquad \text{ pour } P*(k+1) = P(k)$$

$1/b^+$ et $1/b^-$ représentant les coefficients d'amplification et $T0^+$ et $T0^-$ les temps de réponse pour l'augmentation et la diminution de pression.

3. Procédé selon les revendications 1 et 2, caractérisé en ce qu'on vérifie si l'installation de commande de pression (4) s'est mise en oeuvre pour le signal de commande $\Delta T(k)$ formé en dernier lieu et en cas de non mise en oeuvre on détermine une valeur évaluée pour T0 à partir du temps de réponse T0 déterminé en dernier lieu et du signal de commande $\Delta T(k)$ en utilisant des coefficients de pondération.

4. Procédé selon la revendication 1 ou 2, caractérisé en ce qu'on forme b(j) et/ou T(j) à partir des équations suivantes :

$$b^+(j) = (y(j) * x(j) + u^2 * b^+(j - 1))/(x(j)^2 + u^2),$$
$$T0^+(j) = \{(\Delta T(j) * z^+(j - 1) - \Delta T(j - 1) * z^+(j)) * y(j) + v^2 * T0^+(j - 1)\}/(y(j)^2 + v^2)$$
$$b^-(j) = (y(j) * x(j) + u^2 \cdot b^-(j - 1)) / (x(j)^2 + u^2)$$
$$T0^-(j) = \{(\Delta T(j) * z^-(j - 1) - \Delta T(j - 1) * z^-(j)) * y(j) + v^2 * T0^-(j - 1)\} / (y(j)^2 + v^2)$$

avec

$$x(j) = \Delta T(j) - \Delta T(j - 1),$$
$$y(j) = z(j) - z(j - 1)$$

u et v étant des constantes.

Fig.1

Fig. 2

Fig.3